# FASCICULE DE BREVET EUROPEEN

(11) **EP 3 755 575 B1**
(45) Date de publication et mention de la délivrance du brevet: **06.04.2022**
(21) Numéro de dépôt: 19705371.3
(22) Date de dépôt: 22.02.2019
(51) Int. Cl.: B60P 1/08, B60P 1/43, B60P 3/06, B60P 1/34, B60P 1/02, B62D 63/06

(54) **REMORQUE INCLINABLE COMPRENANT DES MOYENS D'ACTIONNEMENT MÉCANIQUE ET DES MOYENS DE VERROUILLAGE EN POSITION HAUTE**
KIPPBARER ANHÄNGER MIT MECHANISCHER BETÄTIGUNGSVORRICHTUNG UND HOCHPOSITIONSVERRIEGELUNGVORRICHTUNG
TILTABLE TRAILER COMPRISING MECHANICAL ACTUATION MEANS AND HIGH-POSITION LOCKING MEANS

(30) Priorité: 22.02.2018 FR 1851538
(43) Date de publication de la demande: 30.12.2020
(73) Titulaire: Cochet, 72130 Sougé-le-Ganelon (FR)
(72) Inventeur: COCHET, Ludovic, 72130 SOUGE LE GANELON (FR)
(74) Mandataire: Vidon Brevets & Stratégie
(86) Numéro de dépôt international: PCT/EP2019/054429
(87) Numéro de publication internationale: WO 2019/162433

(56) Documents cités:
- US-A- 2 807 381
- US-A- 3 811 697
- US-A- 4 077 643
- US-A1- 2005 184 485

## Description

### 1. DOMAINE DE L'INVENTION

Le domaine de l'invention est celui des remorques inclinables.

Plus précisément, l'invention concerne une remorque inclinable permettant à un utilisateur de charger et de décharger seul des objets encombrants et lourds tels que des motocyclettes, des équipements électroménagers, des engins de jardin (par exemple une tondeuse autoportée, un mini-tracteur), etc...

### 2. ARRIÈRE-PLAN TECHNOLOGIQUE

On connaît, dans l'état de la technique, différents types de remorques permettant à une personne seule de procéder au chargement et déchargement d'objets encombrants et lourds, via l'usage d'un diable.

Par exemple, dans le document US 5,975,828 il est proposé une telle remorque comprenant un timon monté de manière solidaire au châssis de la remorque, ainsi qu'un système de basculement du châssis.

Un tel système de basculement comprend un seul câble attaché au centre d'un essieu, commandant le basculement ou le levage du châssis en fonction de la tension exercée sur le câble.

Un autre inconvénient de cette solution connue est que le câble étant monté au centre de l'essieu, celui-ci a tendance à se déformer lorsque le câble se tend et qu'une forte charge est positionnée sur la remorque.

Encore un autre inconvénient de cette solution connue est que la gestion de la tension du câble est réalisée par un dispositif électronique qui nécessite une alimentation électrique.

Encore un autre inconvénient de cette solution connue est que la tension du câble doit être souvent vérifiée afin de prévenir un basculement intempestif du châssis notamment lors d'une conduite.

Encore un autre inconvénient de cette solution connue est que l'on doit utiliser des moyens de freinage pour ralentir la vitesse à laquelle se réalise l'abaissement du châssis.

D'autres techniques présentées dans les documents US 4 077 643 A, US2006/0045693, US2012/0020762, US 2005/0067799, IE 2006/0467 ont été développées.

Cependant ces techniques présentent elles-aussi des inconvénients analogues à ceux exposé précédemment.

De plus, ces techniques sont relativement complexes à mettre en œuvre et nécessitent de nombreuses modifications à apporter à une remorque classique.

Par ailleurs, certaines d'entre elles mettent en œuvre un vérin commandant le déplacement du châssis par rapport au sol, ce qui augmente les coûts de fabrication de la remorque.

### 3. OBJECTIFS DE L'INVENTION

L'invention, dans au moins un mode de réalisation, a notamment pour objectif de pallier ces différents inconvénients de l'état de la technique.

Plus précisément, dans au moins un mode de réalisation de l'invention, un objectif est de fournir une remorque qui soit conforme aux normes de sécurité routière européenne.

Un autre objectif d'au moins un mode de réalisation de l'invention est de fournir une telle remorque dont le coût de fabrication soit relativement peu élevé.

Un autre objectif d'au moins un mode de réalisation de l'invention est de fournir une telle remorque qui puisse mettre en œuvre un essieu standard vendu dans le commerce.

Au moins un mode de réalisation de l'invention a également pour objectif de fournir une telle remorque permettant d'abaisser un châssis d'une faible pente, de l'ordre de 3 à 5 degrés par rapport au sol.

Un autre objectif d'au moins un mode de réalisation de l'invention est de fournir une telle remorque qui puisse s'incliner ou se lever rapidement.

Un objectif complémentaire d'au moins un mode de réalisation de l'invention est de fournir une telle remorque permettant d'effectuer une inclinaison de son plateau de chargement qui ne soit pas brusque.

### 4. EXPOSÉ DE L'INVENTION

Pour cela, l'invention concerne une remorque inclinable pouvant prendre une position haute, ou route, et une position basse de chargement où la remorque est inclinée par rapport au sol, la remorque comprenant un châssis reposant sur le sol par des roues, le châssis étant monté sur un essieu pivotant par rapport auxdites roues.

Selon l'invention, la remorque comprend en outre :
- des moyens d'actionnement du pivotement dudit essieu par rapport aux roues de sorte à faire varier la position dudit châssis par rapport au sol, lesdits moyens d'actionnement comprenant au moins un élément souple solidaire dudit essieu, ledit élément souple étant une sangle ou un câble, et un dispositif du réglage de la tension dudit élément souple fixé sur ledit châssis, et
- des moyens de verrouillage de la remorque en position haute, distincts des moyens d'actionnement comprenant une barre de verrouillage coulissante dont une première extrémité est solidaire dudit essieu et une deuxième extrémité est destinée à coopérer avec un mécanisme de verrouillage, monté sur ledit châssis, lorsque la remorque en position haute.

Ainsi, il est proposé une remorque inclinable dans laquelle le système de levage et d'abaissement du plateau comprend un élément souple, tel un câble ou une sangle attaché(e) à l'essieu, commandant le pivotement de ce dernier et les mouvements du châssis en fonction de la tension exercée sur le câble ou la sangle.

L'expression « souple » s'oppose ici à « rigide », et suppose donc une capacité du câble ou de la sangle à se tendre ou se détendre, c'est-à-dire à être plus ou moins tendu(e).

De façon avantageuse, la gestion de la tension du câble ou de la sangle est réalisée par un dispositif mécanique, tel un treuil ou un tendeur à cliquet respectivement, peu coûteux.

Par ailleurs, la remorque met en œuvre des moyens de verrouillage de la remorque en position haute, distincts des moyens commandant le levage et l'abaissement de la remorque.

Ces moyens de verrouillage prennent la forme d'une barre ou bielle de verrouillage qui réduit les contraintes sur l'essieu lorsque le câble ou la sangle est tendue en position haute de la remorque.

Cette barre permet de retenir l'essieu en position haute.

De cette façon, on prévient un abaissement intempestif du châssis notamment lors d'une conduite.

Ces moyens de verrouillage permettent de réduire les contraintes mécaniques sur l'essieu en position haute de la remorque et l'usure du câble ou de la sangle.

La solution de l'invention ne nécessite pas la mise en œuvre d'un vérin et s'avère par conséquent moins coûteuse.

Selon un aspect particulier de l'invention, lorsque ledit élément souple est une sangle, ledit dispositif de réglage de la tension est un tendeur à cliquet.

Selon un aspect particulier de l'invention, lorsque ledit élément souple est un câble, ledit dispositif de réglage de la tension est un treuil d'enroulement dudit câble.

Ces deux alternatives de mise en œuvre sont fiables, peu complexes et économiques. Selon un aspect particulier de l'invention, la seconde extrémité de la barre de verrouillage comprend une lumière dans laquelle, en position haute de la remorque, une goupille de verrouillage est destinée à venir se loger.

Le verrouillage manuel de la remorque en position haute peut être effectué en une seule opération par l'opérateur. Le déverrouillage est également aisé puisqu'il suffit de retirer la goupille de verrouillage pour déplacer la barre de verrouillage et permettre le mouvement de l'essieu.

Selon un aspect particulier de l'invention, ledit châssis comprend un premier cadre, dit cadre arrière, relié de façon pivotante à un deuxième cadre, dit cadre avant, de sorte à permettre le pliage de ladite remorque.

On réduit ainsi l'encombrement de la remorque pour la ranger dans un garage, par exemple.

Selon un aspect particulier de l'invention, le cadre arrière du châssis est relié au cadre avant par le biais de moyens de liaison situés de chaque côté de ladite remorque, lesdits moyens de liaison portant un axe de pivotement du cadre arrière par rapport au cadre avant.

Selon un aspect particulier de l'invention, lesdits moyens de liaison présentent un espace situé entre lesdits cadres arrière et avant, destiné à recevoir ledit essieu lorsque la remorque est en position basse.

Selon un aspect particulier de l'invention, la remorque comprend en outre une béquille escamotable montée sur ledit châssis.

Une telle béquille permet d'assurer le maintien vertical de la remorque lorsque la remorque est en position de stockage, c'est-à-dire lorsque les cadres avant et arrière du châssis sont rabattus en regard l'un de l'autre.

Selon un aspect particulier de l'invention, la remorque comprend un timon portant une flèche d'attelage solidarisé audit châssis par le biais d'une liaison pivot permettant le rabattement dudit timon par rapport audit châssis.

Cette possibilité de rabattre le timon permet de réduire l'encombrement de la remorque, en position de stockage notamment.

Selon un aspect particulier de l'invention, la remorque comprend des moyens de suspension situés à l'intérieur dudit essieu.

Ces moyens de suspension, tels des éléments en caoutchouc, permettent d'améliorer la stabilité de la remorque

Selon un aspect particulier de l'invention, ledit essieu comprend un tube extérieur dans lequel est monté un tube intérieur dont chacune des extrémités est solidaire d'une roue, le châssis étant solidaire du tube extérieur.

### 5. LISTE DES FIGURES

D'autres caractéristiques et avantages de l'invention apparaîtront à la lecture de la description suivante de modes de réalisation de celle-ci, données à titre d'exemples indicatifs et non limitatifs, et des dessins annexés, dans lesquels :
- les figures 1A et 1B sont des vues en perspective d'une remorque inclinable selon un mode de réalisation de l'invention respectivement en position route (encore appelée position haute) et en position dite de chargement (encore appelée position basse) ;
- les figures 2 à 4 sont différentes vues de la même remorque, en position haute, une portion du plateau n'étant pas représentée pour des raisons de clarté,
   ▪ la figure 2 étant une vue de dessus, en perspective, de la remorque ;
   ▪ la figure 3 étant une vue de dessous, en perspective, de la remorque ; et
   ▪ la figure 4 étant une vue de dessous de la remorque ;
- les figures 5A et 5B sont des vues de détail, en coupe, de la remorque au niveau d'une roue latérale, lorsque la remorque est en position haute et en position basse respectivement ;
- les figures 6A et 6B sont des vues de côté de la remorque, en position haute et en position basse respectivement ;
- la figure 7 est une vue en perspective de la remorque en position repliée (encore appelée position de stockage) ;
- la figure 8 est une vue en perspective d'une remorque inclinable selon un autre mode de réalisation de l'invention, en position route ;
- les figures 9A et 9B sont des vues de détail de la barre de verrouillage en position haute ou route de la remorque (les moyens d'actionnement n'étant pas représentés par souci de clarté) ;
- les figures 10A et 10B sont des vues de détail de la barre de verrouillage en position haute de la remorque (les moyens d'actionnement n'étant pas représentés par souci de clarté) ;
- les figures 11A et 11B sont des vues de détail de la sangle d'actionnement en position haute ou route de la remorque (la barre de verrouillage n'étant pas représentée par souci de clarté) ;
- les figures 12A et 12B sont des vues de détail de la sangle d'actionnement en position haute de la remorque (la barre de verrouillage n'étant pas représentée par souci de clarté).

### 6. DESCRIPTION DÉTAILLÉE

Sur toutes les figures du présent document, les éléments identiques sont désignés par une même référence numérique.

Par ailleurs, les termes « avant » et « arrière » prennent comme référentiel le sens d'avancement du véhicule tractant.

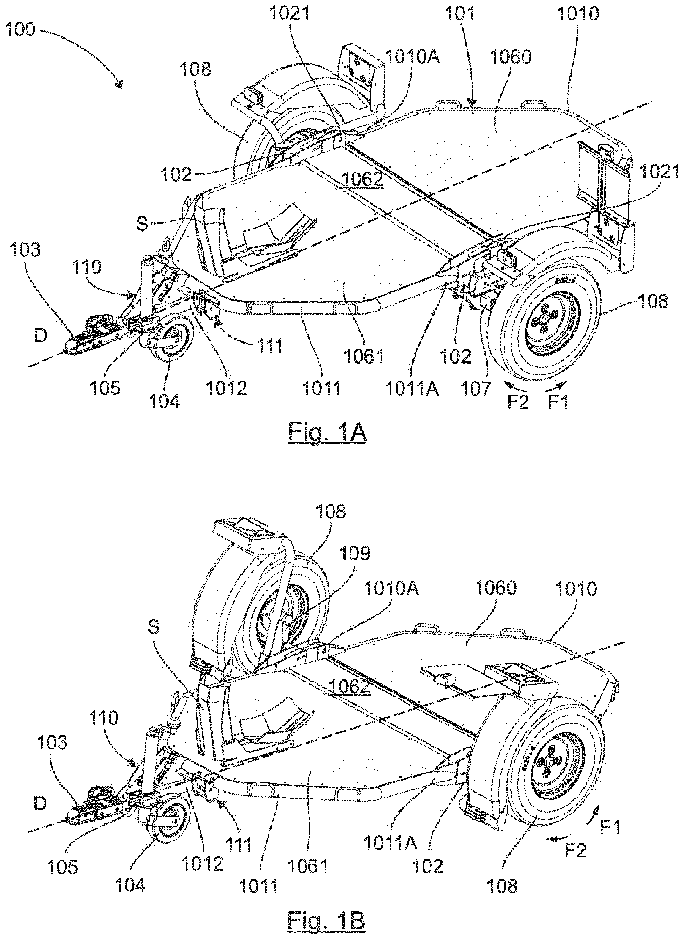

Les figures 1A et 1B sont des vues en perspective d'une remorque inclinable selon un mode de réalisation particulier de l'invention respectivement en position route (encore appelée position haute) dans laquelle la remorque est sensiblement parallèle au sol et en position dite de chargement (encore appelée position basse) dans laquelle la remorque est inclinée par rapport au sol.

Plus précisément, la remorque 100, dans ce mode de réalisation de l'invention, est pourvue d'un châssis 101 en deux parties, à savoir un châssis arrière et un châssis avant.

Le châssis arrière comprend un premier cadre, dit cadre arrière 1010, et le châssis avant comprend un deuxième cadre, dit cadre avant 1011.

Tels qu'illustrés, les cadres arrière 1010 et avant 1011 présentent chacun une forme sensiblement en « U » dont les dimensions, notamment la longueur, sont sensiblement identiques.

Les cadres arrière 1010 et avant 1011 sont articulés l'un par rapport à l'autre de sorte à permettre le pliage de la remorque 100 (en minimisant son encombrement lors du stockage), et inversement son dépliage.

Les extrémités 1010A droite et gauche du cadre arrière 1010 sont reliées aux extrémités 1011A droite et gauche du cadre avant 1011 par le biais de moyens de liaison 102.

Les moyens de liaison 102, situés de chaque côté de la remorque 100, comprennent un axe de pivotement 1021 du cadre arrière 1010 par rapport au cadre avant 1011 (et donc du châssis arrière par rapport au châssis avant).

Les axes de pivotement 1021 sont coaxiaux.

Par ailleurs, la remorque comprend un plateau fixé sur le châssis 101.

Un tel plateau comprend une première portion, dite plateau arrière 1060, solidaire du cadre arrière 1010 et une deuxième portion, dite plateau avant 1061, solidaire du cadre avant 1011.

Le plateau arrière 1060 et le plateau avant 1061 sont coplanaires, l'espace entre ces deux plateaux étant obturé par une plaque de liaison 1062 s'étendant entre les moyens de liaison 102 situés de chaque côté de la remorque, au niveau des roues de cette dernière.

La plaque 1062 qui est montée sur le châssis avant est située dans l'espace formé entre les panneaux avant 1161 et arrière 1060 de manière à être sensiblement coplanaire avec ceux-ci.

Dans une variante de mise en œuvre, aucune plaque de liaison n'est mise en œuvre, les bords du plateau arrière 1060 et du plateau avant 1061 étant disposés en regard (un espace prédéterminé étant ménagé entre les deux bords en vis-à-vis).

Les extrémités longitudinales de la plaque 1062 sont solidaires des moyens de liaisons 102 situés de chaque côté de la remorque 100.

La remorque 100 comprend en outre un timon 1012 dont une première extrémité est solidaire du châssis avant et la seconde extrémité est solidaire d'une flèche d'attelage 103 permettant de réaliser la fixation de la remorque 100 à un véhicule tractant.

Une roue avant 104 est montée sur le timon 1012 par le biais d'un mécanisme de réglage 105 permettant d'ajuster la hauteur de la roue avant 104, et donc l'inclinaison de la remorque 100, de sorte à simplifier le montage de la flèche d'attelage 103 sur un véhicule tractant.

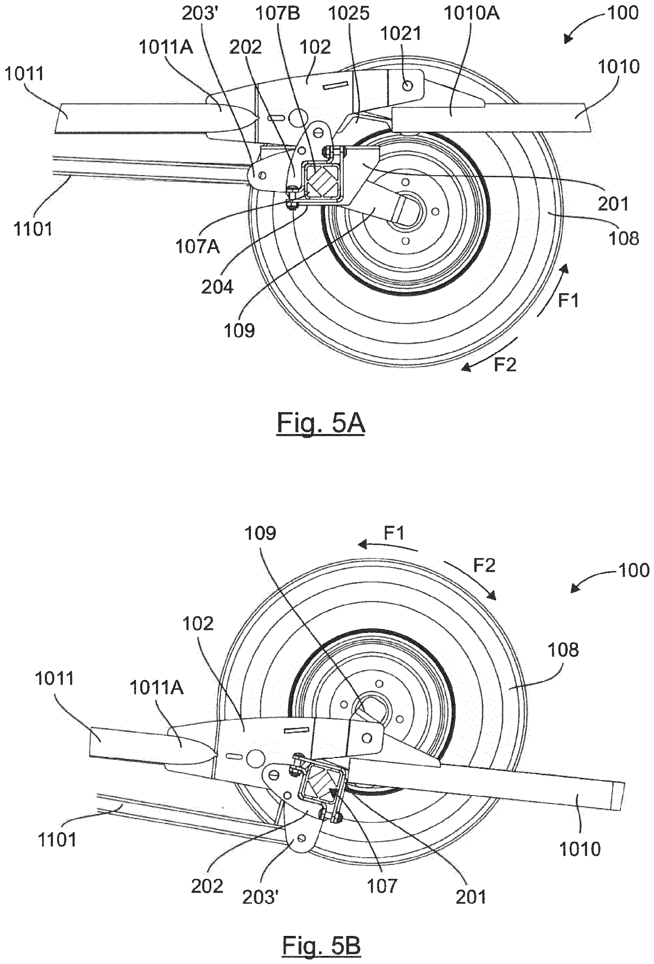

Par ailleurs, la remorque 100 met avantageusement en œuvre un essieu 107 standard vendu dans le commerce (figure 5B).

L'essieu 107 comprend un tube extérieur 107A de section carré et un tube intérieur 107B de section carré, formant tube de liaison, relié de façon articulée à chacune de ses extrémités aux bras mécaniques 109 et moyeux de support des roues 108 (figure 5A).

L'essieu 107 est monté pivotant par rapport aux roues 108 de la remorque 100.

Chacun des bras mécanique 109 peut effectuer une rotation par rapport au centre d'une roue 108 selon un sens horaire *F₂*, et antihoraire *F₁*, de manière à faire basculer la remorque 100 d'une position basse, telle qu'illustrée sur la figure 1B, à une position haute, telle qu'illustrée sur la figure 1A, et inversement.

La remorque 100 comprend en outre des moyens d'actionnement 110 permettant de commander la rotation des bras mécaniques 109 et donc le déplacement de la remorque 100 entre une première position, dite position haute, et une deuxième position, dite position basse, et inversement.

Avantageusement, la remorque 100 comprend des moyens de verrouillage 111 du basculement de cette dernière, distincts des moyens d'actionnement 110.

Ces moyens de verrouillage 111 permettent de bloquer la rotation des bras mécaniques 109 lorsque la remorque 100 est en position haute de manière à éviter le passage intempestif de la remorque 100 en position basse.

Ainsi, lorsque la remorque 100 est en position haute, telle que représentée sur la figure 1A, le châssis 101 est sensiblement parallèle au sol.

Lorsqu'un utilisateur souhaite charger des objets sur le plateau 1060, 1061, l'utilisateur désengage les moyens de verrouillage 111, puis agit sur les moyens d'actionnement 110 de manière à entraîner un pivotement des bras mécaniques 109, selon un arc de cercle orienté dans le sens de la flèche *F₁,* ce qui entraîne la rotation et l'abaissement de l'essieu 107 et donc du châssis 101 de la remorque 100 monté sur celui-ci.

Ainsi, l'utilisateur peut charger aisément des objets encombrants sur le plateau 1060, 1061, car la pente d'inclinaison du châssis 101 par rapport au sol est relativement faible (de l'ordre de quelques degrés).

Une fois le ou les objets chargés sur le plateau, l'utilisateur peut actionner les moyens d'actionnement 110 de manière à entrainer le pivotement des bras mécaniques 109 et de l'essieu 107, selon un arc de cercle orienté dans le sens de la flèche *F₂*.

Un tel pivotement a pour effet de redresser l'essieu 107, et donc le châssis 101 monté sur celui-ci, jusqu'à ce que le châssis 101 soit à nouveau sensiblement parallèle au sol.

Lorsque la remorque est en position haute, l'utilisateur réengage les moyens de verrouillage 111 de manière à empêcher la rotation de l'essieu 107.

Dans le mode de réalisation illustré, un support S, permettant d'assurer le maintien d'un objet, tel une motocyclette, lorsque celui-ci est chargé sur la remorque 100, est disposé sur le plateau avant 1061.

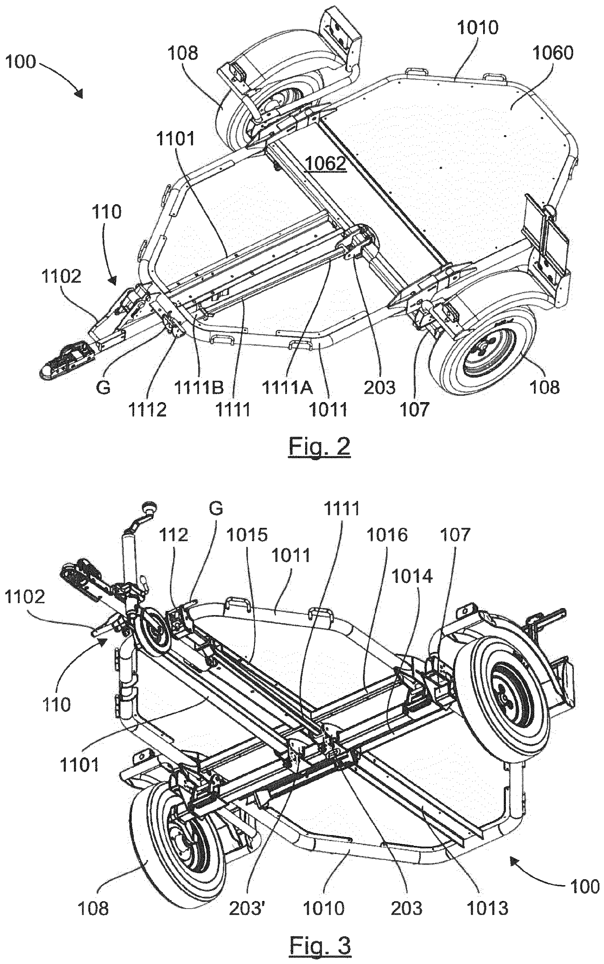

Les figures 2 à 4 sont des vues de dessus et de dessous de la remorque 100 des figures 1A et 1B, qui montrent la structure des moyens d'actionnement 110 du basculement de la remorque et des moyens de verrouillage 111.

Dans le mode de réalisation illustré sur ces figures, les moyens d'actionnement 110 comprennent un élément souple, qui est ici une sangle, 1101 solidaire d'une part de l'essieu 107 et d'autre part d'un tendeur 1102, tel un tendeur à cliquet, qui est solidaire du châssis 101 (on réalise de la sorte un mouflage qui permet de relever aisément la remorque).

Tel qu'illustré, le tendeur à cliquet 1102 est fixé sur le châssis avant et comprend deux points d'ancrage de la sangle 1101.

Comme cela est visible sur la figure 3, la sangle 1101 passe dans une pièce de renvoi 203' solidaire de l'essieu 107, de sorte à ce qu'elle s'étende dans deux plans parallèles.

Le fonctionnement d'un tel tendeur à cliquet 1102, bien connu de l'homme du métier, n'est pas décrit ici en détails. On comprend qu'il permet de tendre ou de relâcher l'effort de tension appliqué sur la sangle 1011, et donc de jouer sur la longueur de cette dernière.

Les moyens de verrouillage 111 comprennent une barre ou bielle de verrouillage 1111 coulissante dont une première extrémité 1111A est montée pivotante sur l'essieu 107, par le biais d'une pièce de liaison 203, et une seconde extrémité 1111B est montée mobile en translation, sensiblement selon l'axe longitudinal D de la remorque, à l'intérieur d'un mécanisme de verrouillage 1112 et d'un anneau de guidage 1113 fixés au châssis 101.

Cet anneau de guidage 1113 permet de retenir la barre de verrouillage 1111 en positions basse et de stockage de la remorque 100.

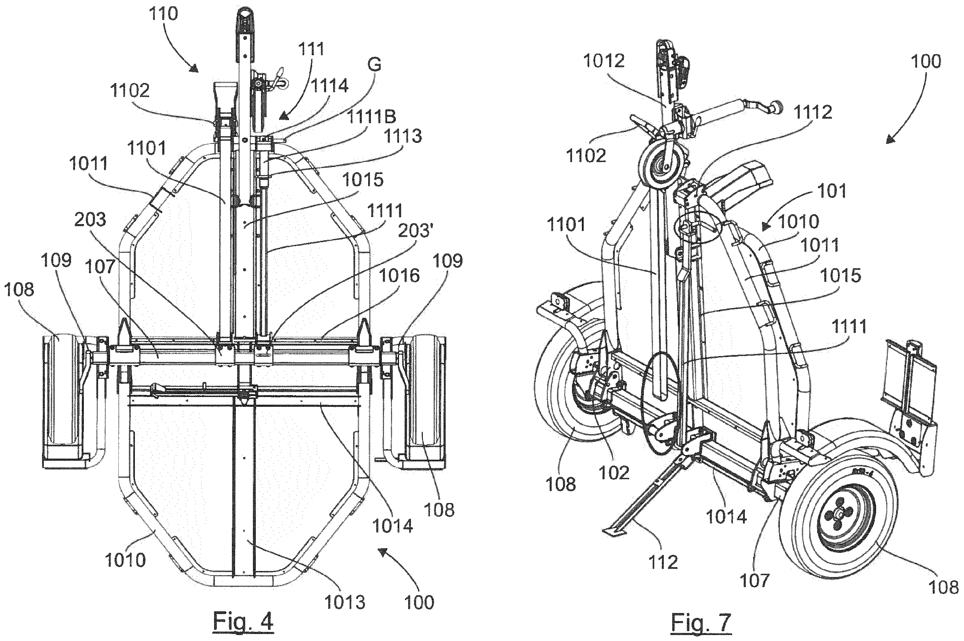

La seconde extrémité 1111B de la barre de verrouillage 1111 comprend une lumière 1114 (visible sur les figures 4et 6A) dans laquelle, en position haute de la remorque 100, une goupille G est destinée à venir se loger.

Lorsque la goupille G est logée dans la lumière 1114, elle vient coopérer avec le mécanisme de verrouillage 1112 et empêche ainsi tout déplacement de la barre de verrouillage 1111, et donc toute rotation de l'essieu 107, lorsque la remorque est en position haute.

Par ailleurs, le châssis arrière comprend un longeron central 1013, et une traverse 1014 permettant notamment de renforcer la tenue mécanique du châssis arrière.

De manière similaire, le châssis avant comprend un longeron central 1015 et une traverse, 1016.

Le longeron central 1015 porte l'élément de guidage 1113 et le timon 1012, le tendeur à cliquet 1102 et le mécanisme de verrouillage 1112 étant solidaires de du cadre avant 1011.

Les figures 5A et 5B sont des vues de détail en coupe de la remorque 100, à proximité d'une roue 108 latérale de cette dernière, lorsque la remorque est en position haute et en position basse respectivement.

Ces figures permettent de détailler l'agencement et la cinématique des différents éléments de la remorque situés à proximité de chaque roue 108 latérale.

Un bras mécanique 109 présente une première extrémité solidaire en rotation d'une roue 108 et une seconde extrémité solidaire en rotation de l'essieu 107.

Deux pièces d'articulation 201, 202 fixées l'une à l'autre par boulonnage autour du tube extérieur 107A de l'essieu 107, permettent de solidariser l'essieu 107 avec le châssis de la remorque 100.

Plus précisément, la pièce d'articulation 202 est solidarisée de manière pivotante aux moyens de liaison 102 dans l'espace formé entre les cadres arrière 1010 et avant 1011.

Par ailleurs, la sangle 1101 des moyens de commande est reliée à l'essieu 107 par le biais d'une pièce de renvoi 203' et la barre de verrouillage (non visible) des moyens de verrouillage 111 est reliée à l'essieu 107 par le biais d'une pièce de liaison 203.

Il convient de noter que la solution de pivotement de l'essieu décrite ici permet de conserver la suspension intérieure classique utilisée sur la plupart des remorques bagagères, mettant en œuvre quatre profils caoutchouc 204 intégrés entre les deux tubes 107A, 107B carrés formant l'essieu 107.

Les profils caoutchouc 204 forment ainsi des moyens de suspension de la remorque 100.

La remorque de l'invention est ainsi avantageuse en ce sens qu'elle peut mettre en œuvre un essieu standard du commerce.

Lorsque l'utilisateur souhaite basculer la remorque 100 de la position haute vers la position basse pour charger des objets sur le plateau, l'utilisateur désengage les moyens de verrouillage 111 en retirant la goupille G de manière à autoriser la rotation de l'essieu 107 et le mouvement du châssis.

L'utilisateur actionne ensuite le tendeur à cliquet de sorte à allonger la sangle 1101.

L'allongement de la sangle 1101 permet, sous l'action de la gravité exercée sur la remorque, d'entraîner la rotation de l'essieu 107 selon un arc de cercle orienté dans le sens de la flèche *F₁*.

La remorque vient alors en position basse.

Une fois le ou les objets chargés sur la remorque 100, l'utilisateur actionne le tendeur à cliquet pour réduire la longueur de la sangle 1101 de manière à tirer sur l'essieu 107.

L'effort de traction appliqué sur l'essieu 107 permet la rotation de celui-ci selon un arc de cercle orienté dans le sens de la flèche *F₂*.

Tel qu'illustré sur la figure 5B, lorsque la remorque 100 est en position basse, l'essieu 107 et les pièces d'articulation 201, 202 viennent se loger dans un espace 1025 creux formé en partie inférieure des moyens de liaison 102 et situé entre les cadre avant 1011 et arrière 1010 du châssis (c'est-à-dire dans le plateau de la remorque), ce qui permet d'aligner dans un même plan incliné les châssis avant et arrière, et de minimiser la pente d'inclinaison du châssis 107 par rapport au sol.

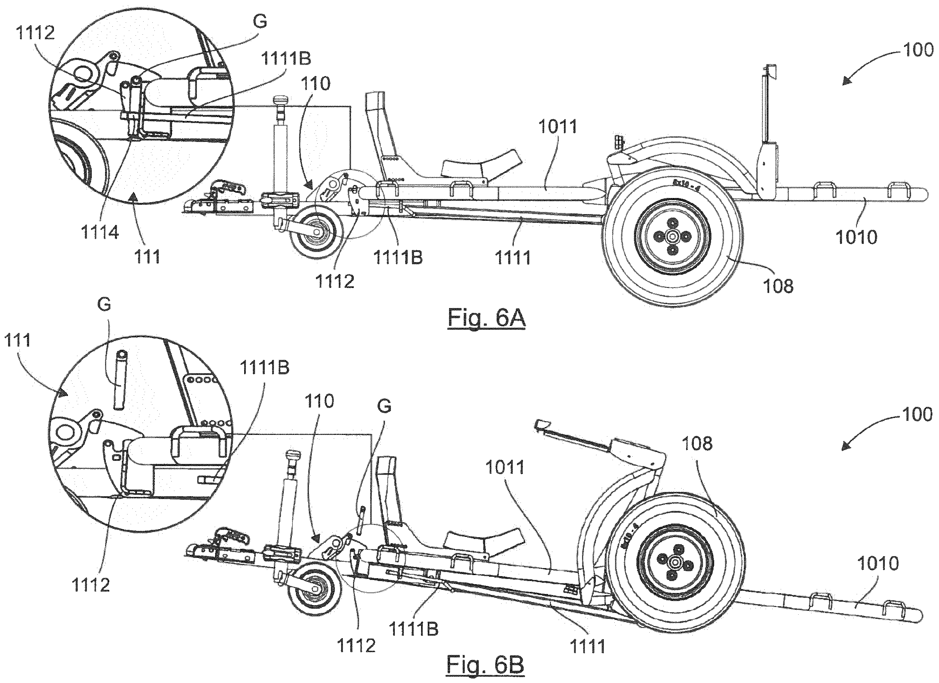

Les figures 6A et 6B sont des vues de côté, respectivement en position haute (verrouillée) et en position basse (déverrouillée), de la remorque 100.

Ces figures illustrent l'agencement et la cinématique des moyens de verrouillage 111 du basculement de la remorque 100, lorsque celle-ci est en position haute.

Lorsque la remorque 100 est en position haute (figure 6A), le mécanisme de verrouillage 1112, solidaire du cadre avant 1011 du châssis, retient la barre de verrouillage 1111 par le biais de la goupille G qui est logée dans la lumière 1114 ménagée sur l'extrémité avant 1111B de la barre de verrouillage 1111.

En d'autres termes, la barre de verrouillage 1111 est fixe par rapport au châssis, l'immobilisation de la barre de verrouillage 1111 rendant impossible la rotation de l'essieu 107et l'abaissement de la remorque 100.

Ainsi, les moyens de verrouillage 111 permettent d'améliorer la fiabilité de la remorque 100 en réduisant les risques d'une inclinaison intempestive de cette dernière.

Lorsque l'utilisateur souhaite basculer la remorque 100 en position basse pour le chargement d'objets sur le plateau, l'utilisateur retire la goupille G du mécanisme de verrouillage 1112, ce qui libère la barre de verrouillage 1111 en translation et autorise la rotation de l'essieu 107 de la position de la figure 5A à celle de la figure 5B.

Ainsi, l'opérateur n'effectue qu'une seule opération manuelle de déverrouillage en retirant la goupille G, le verrouillage manuel en position haute de la remorque étant central.

Le déplacement de l'essieu 107, induit par les moyens l'actionnement 110 comprenant le tendeur 1102 et la sangle 1101, entraîne le coulissement de la barre de verrouillage 1111 et l'extraction de l'extrémité avant 1111B de la barre de verrouillage 1111 hors du mécanisme de verrouillage 1112.

C'est donc le câble ou la sangle qui agit sur l'essieu pour le faire pivoter, une fois la barre de verrouillage (ou de retenue) libérée par le retrait de la goupille de verrouillage.

La figure 7 est une vue de la remorque dans une position repliée, dite position de stockage.

Pour stocker la remorque dans la position illustrée, il est nécessaire de replier le plateau arrière et puis d'abaisser la remorque.

Ainsi, l'utilisateur replie d'abord le châssis arrière vers le châssis avant, de manière à ce que les cadres arrière 1010 et avant 1011 soient disposés en regard l'un de l'autre.

Un tel repli du châssis arrière vers le châssis avant est assuré par le biais des axes de pivotement 1021 des moyens de liaison 102 disposés entre les cadres arrière 1010 et avant 1011.

L'utilisateur retire ensuite la goupille G du mécanisme de verrouillage 1112 de sorte à permettre le coulissement de la barre de verrouillage 1111 et donc la rotation de l'essieu 107.

Puis, l'utilisateur actionne le tendeur 1102 pour réduire l'effort de traction exercé sur la sangle 1101 de manière à permettre la rotation de l'essieu 107 et amener la remorque en position basse (figure 1B notamment).

L'utilisateur soulève ensuite la remorque 100 en position verticale.

Dans une telle position, les roues 108 sont toujours en contact avec le sol ce qui permet de déplacer aisément la remorque, pour ranger celle-ci par exemple.

Une béquille 112 escamotable portée par le châssis arrière, au niveau de la traverse 1014, permet de maintenir la remorque 100 verticalement.

La remorque 100 est ainsi en position compacte de stockage (figure 7).

Par ailleurs, le timon 1012 étant monté pivotant sur le longeron 1015, il peut-être replié et rabattu de manière à réduire davantage l'encombrement de la remorque 100, en position de stockage notamment.

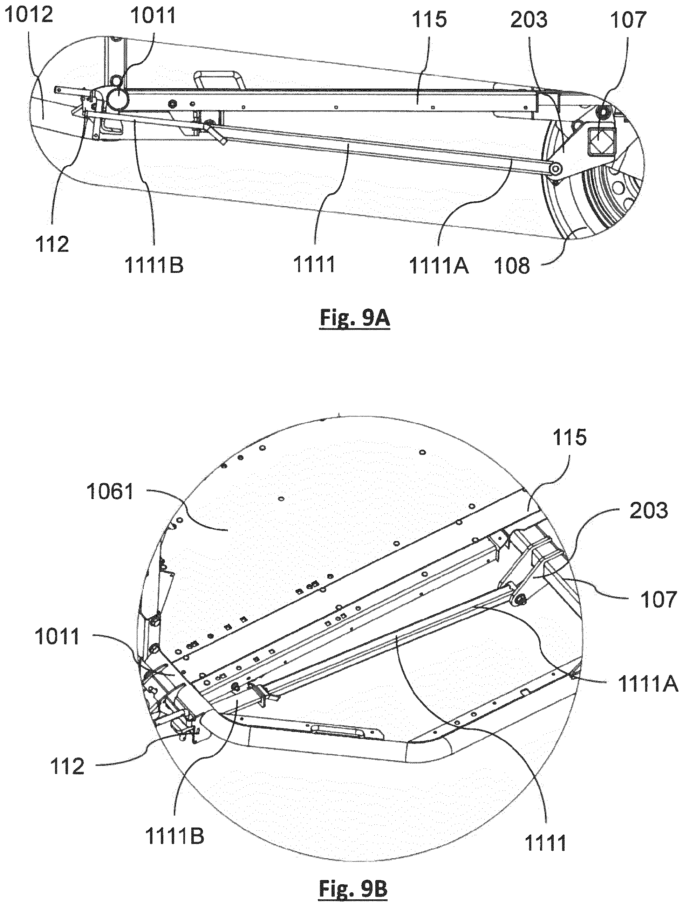

Les figures 9A et 9B sont des vues de détail de la barre de verrouillage 1111 en position haute ou route de la remorque (les moyens d'actionnement n'étant pas représentés par souci de clarté).

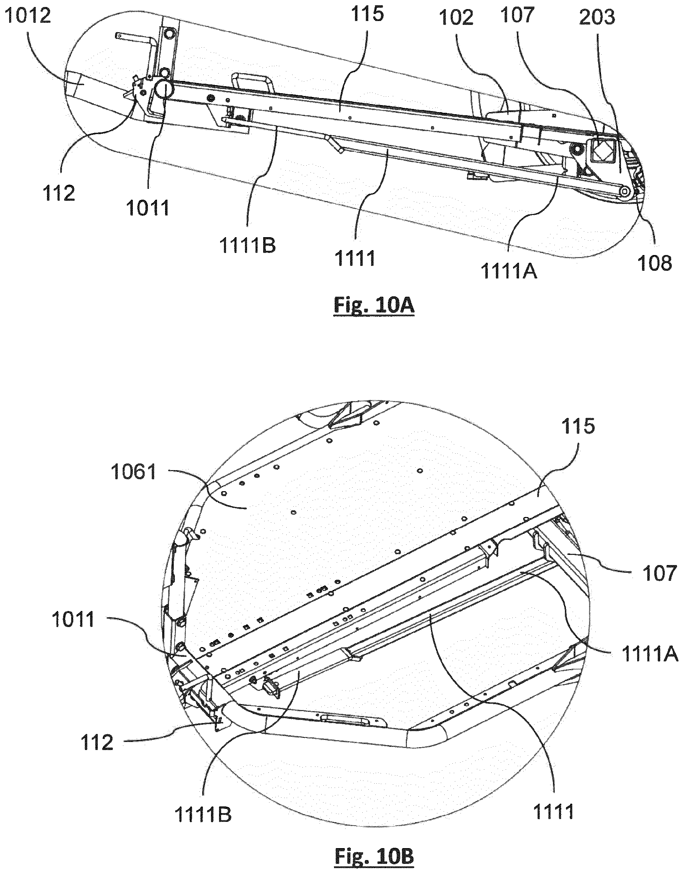

Les figures 10A et 10B sont des vues de détail de la barre de verrouillage 1111 en position haute de la remorque (les moyens d'actionnement n'étant pas représentés par souci de clarté).

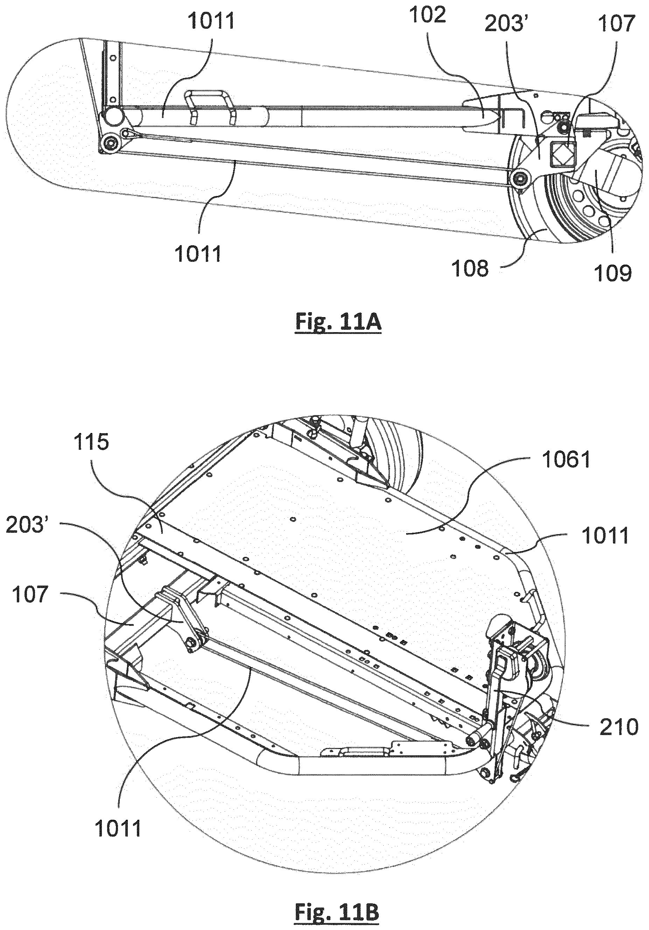

Les figures 11A et 11B sont des vues de détail de l'élément souple 1101 d'actionnement en position haute ou route de la remorque (la barre de verrouillage n'étant pas représentée par souci de clarté). Dans l'exemple illustré, l'élément souple est un câble mais il est possible d'utiliser une sangle telle que précédemment décrite.

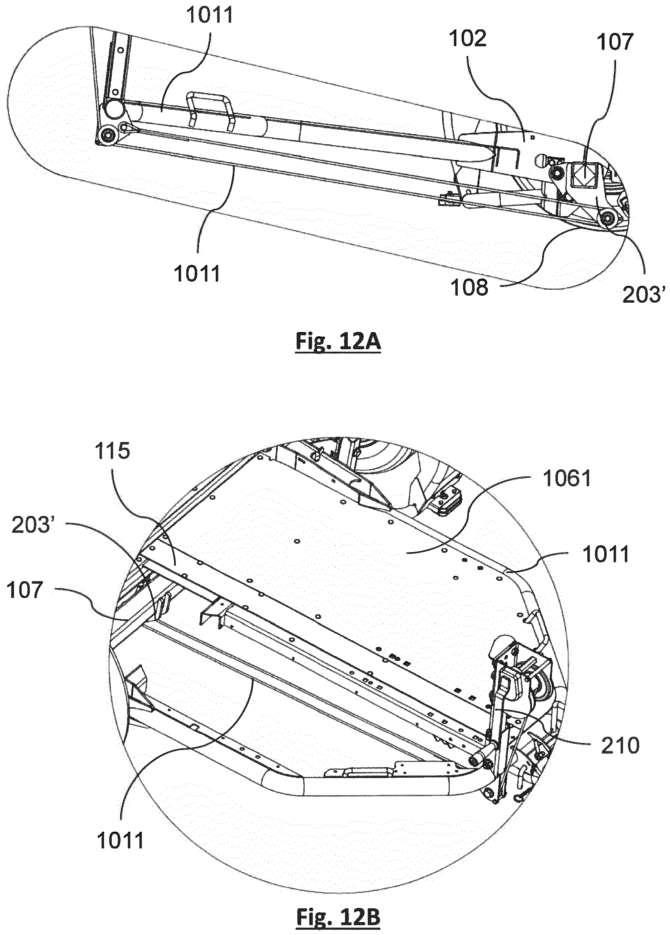

Les figures 12A et 12B sont des vues de détail de l'élément souple 1101 d'actionnement en position haute de la remorque (la barre de verrouillage n'étant pas représentée par souci de clarté). Dans l'exemple illustré, l'élément souple est un câble mais il est possible d'utiliser une sangle telle que précédemment décrite.

Dans le mode de réalisation illustré, les moyens d'actionnement 110 du basculement de la remorque 100 sont manuels.

Cependant, ces moyens d'actionnement peuvent être motorisés.

Par ailleurs, la goupille peut être remplacée par tout autre élément, tel un rivet par exemple, permettant de solidariser la barre de verrouillage au mécanisme de verrouillage.

Dans le mode de réalisation illustré sur les figures 1A à 7, les moyens d'actionnement du pivotement de l'essieu et du basculement de la remorque comprennent une sangle reliée à un tendeur.

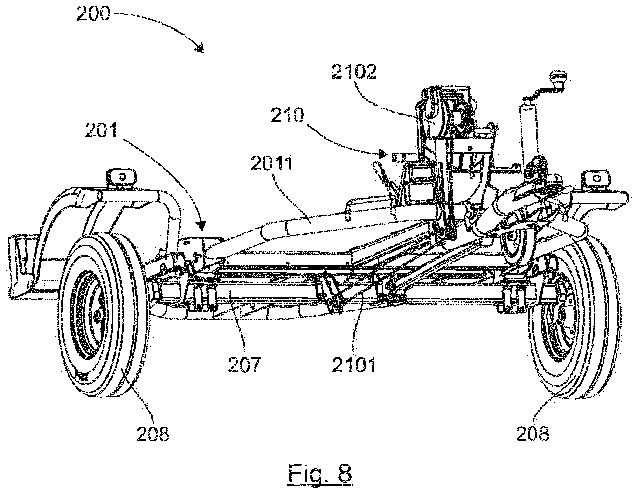

Dans un autre mode de réalisation illustré sur la figure 8, les moyens d'actionnement 210 du pivotement de l'essieu 207 par rapport aux roues 208 et du basculement de la remorque 200 comprennent un câble 2101 souple, formant élément souple, relié à un treuil 2102 d'enroulement du câble.

Ces moyens d'actionnement 210 permettent comme décrit précédemment de faire varier la position du châssis 201 par rapport au sol.

Le câble 2101 souple est solidaire de l'essieu 207 et le treuil 2102 d'enroulement du câble est fixé sur le châssis 201.

Plus précisément, le treuil 2102 est fixé sur le cadre avant 2011 du châssis 201.

## Revendications

1. Remorque (100) inclinable pouvant prendre une position haute, ou route, et une position basse de chargement où la remorque est inclinée par rapport au sol, la remorque (100) comprenant un châssis (101) reposant sur le sol par des roues (108), le châssis (101) étant monté sur un essieu (107) pivotant par rapport auxdites roues (108),
ladite remorque (100) comprenant en outre :
- des moyens d'actionnement (110) du pivotement dudit essieu (107) par rapport aux roues (108) de sorte à faire varier la position dudit châssis (101) par rapport au sol, lesdits moyens d'actionnement (110) comprenant au moins un élément souple (1101) solidaire dudit essieu (107), ledit élément souple (1101) étant une sangle ou un câble, et un dispositif de réglage de la tension (1102) dudit élément souple (1101) fixé sur ledit châssis (101), et
- des moyens de verrouillage (111) de la remorque (100) en position haute, distincts des moyens d'actionnement (110),
la remorque (100) étant **caractérisée en ce que** les moyens de verrouillage (111) comprennent une barre de verrouillage (1111) coulissante dont une première extrémité (1111A) est solidaire dudit essieu (107) et une deuxième extrémité (1111B) est destinée à coopérer avec un mécanisme de verrouillage (1112), monté sur ledit châssis (101), lorsque la remorque (100) en position haute.

2. Remorque (100) selon la revendication 1, **caractérisée en ce que** lorsque ledit élément souple (1101) est une sangle, ledit dispositif de réglage de la tension (1102) est un tendeur à cliquet.

3. Remorque (100) selon la revendication 1, **caractérisée en ce que** lorsque ledit élément souple (1101) est un câble, ledit dispositif de réglage de la tension (1102) est un treuil d'enroulement dudit câble.

4. Remorque (100) selon l'une quelconque des revendications 1 à 3, **caractérisée en ce que** la seconde extrémité (1111B) de la barre de verrouillage 1111 comprend une lumière (1114) dans laquelle, en position haute de la remorque (100), une goupille (G) de verrouillage est destinée à venir se loger.

5. Remorque (100) selon l'une quelconque des revendications 1 à 4, **caractérisée en ce que** ledit châssis (101) comprend un premier cadre, dit cadre arrière (1010), relié de façon pivotante à un deuxième cadre, dit cadre avant (1011), de sorte à permettre le pliage de ladite remorque.

6. Remorque (100) selon la revendication 5, **caractérisée en ce que** le cadre arrière (1010) du châssis (101) est relié au cadre avant (1011) par le biais de moyens de liaison (102) situés de chaque côté de ladite remorque (100), lesdits moyens de liaison (102) portant un axe de pivotement (1021) du cadre arrière (1010) par rapport au cadre avant (1011).

7. Remorque (100) selon la revendication 6, **caractérisée en ce que** lesdits moyens de liaison (102) présentent un espace (1025) situé entre lesdits cadres arrière (1010) et avant (1011), destiné à recevoir ledit essieu (107) lorsque la remorque (100) est en position basse.

8. Remorque (100) selon l'une quelconque des revendication 1 à 7, **caractérisé en ce qu'**elle comprend en outre une béquille (112) escamotable montée sur ledit châssis (101).

9. Remorque (100) selon l'une quelconque des revendications 1 à 8, **caractérisé en ce qu'**elle comprend un timon (1012) portant une flèche d'attelage (103) solidarisé audit châssis (101) par le biais d'une liaison pivot permettant le rabattement dudit timon (1012) par rapport audit châssis (101).

10. Remorque (100) selon l'une des revendications 1 à 9, **caractérisée en ce qu'**elle comprend des moyens de suspension (204) situés à l'intérieur dudit essieu (107).

11. Remorque (100) selon l'une des revendications 1 à 10, **caractérisée en ce que** ledit essieu (107) comprend un tube extérieur (107A) dans lequel est monté un tube intérieur (107B) dont chacune des extrémités est solidaire d'une roue (108), le châssis (101) étant solidaire du tube extérieur (107A).

## Patentansprüche

1. Verstellbarer Anhänger (100), der eine hohe, oder Straßenposition, und eine niedrige Ladeposition einnehmen kann, in der der Anhänger in Bezug auf den Boden verstellt wird, wobei der Anhänger (100) ein Gestell (101) umfasst, welches durch Räder (108) auf dem Boden aufliegt, wobei das Gestell (101) auf einer in Bezug auf die Räder (108) schwenkbaren Achse (107) montiert ist,
wobei der Anhänger (100) dass er weiter Folgendes umfassen:
- Betätigungsmittel (110) zum Schwenken der Achse (107) in Bezug auf die Räder (108), um die Position des Gestells (101) in Bezug auf den Boden variieren zu lassen, wobei die Betätigungsmittel (110) mindestens ein flexibles Element (1101) umfassen, das fest mit der Achse (107) verbunden ist, wobei das flexible Element (1101) ein Gurt oder ein Kabel ist, und eine Vorrichtung zum Einstellen der Spannung (1102) des flexiblen Elements (1101), welche auf dem Gestell (101) befestigt ist, und
- Mittel zum Verriegeln (111) des Anhängers (100) in hoher Position, die sich von den Betätigungsmitteln (110) unterscheiden,
wobei der Anhänger (100) **dadurch gekennzeichnet ist, dass** Mittel zum Verriegeln (111) umfasst eine gleitende Verriegelungsstange (1111) umfassend, von der ein erstes Ende (1111A) fest mit der Achse (107) verbunden ist, und ein zweites Ende (1111B) dazu bestimmt ist, mit einem Verriegelungsmechanismus (1112) zusammenzuwirken, der auf dem Gestell (101) montiert ist, wenn der Anhänger (100) in der hohen Position ist.

2. Anhänger (100) nach Anspruch 1, **dadurch gekennzeichnet, dass**, wenn das flexible Element (1101) ein Gurt ist, die Vorrichtung zum Einstellen der Spannung (1102) ein Spannratsche ist.

3. Anhänger (100) nach Anspruch 1, **dadurch gekennzeichnet, dass**, wenn das flexible Element (1101) ein Kabel ist, die Vorrichtung zum Einstellen der Spannung (1102) eine Haspel zum Wickeln des Kabels ist.

4. Anhänger (100) nach einem der Ansprüche 1 bis 3, **dadurch gekennzeichnet, dass** das zweite Ende (1111B) der Verriegelungsstange 1111 ein Langloch (1114) umfasst, in das in der hohen Position des Anhängers (100) ein Verriegelungsstift (G) dazu bestimmt ist, eingeführt zu werden.

5. Anhänger (100) nach einem der Ansprüche 1 bis 4, **dadurch gekennzeichnet, dass** das Gestell (101) einen ersten Rahmen, Heckrahmen (1010) genannt, umfasst, der schwenkbar mit einem zweiten Rahmen, Frontrahmen (1011) genannt, verbunden ist, um das Biegen des Anhängers zu ermöglichen.

6. Anhänger (100) nach Anspruch 5, **dadurch gekennzeichnet, dass** der Heckrahmen (1010) des Gestells (101) über Verbindungsmittel (102) mit dem Frontrahmen (1011) verbunden ist, die sich beiderseits des Anhängers (100) befinden , wobei die Verbindungsmittel (102) eine Schwenkachse (1021) des Heckrahmens (1010) in Bezug auf den Frontrahmen (1011) tragen.

7. Anhänger (100) nach Anspruch 6, **dadurch gekennzeichnet, dass** die Verbindungsmittel (102) einen Raum (1025) aufweisen, der sich zwischen dem Heck- (1010) und Frontrahmen (1011) befindet, dazu bestimmt, um die Achse (107) aufzunehmen, wenn der Anhänger (100) in der niedrigen Position ist.

8. Anhänger (100) nach einem der Ansprüche 1 bis 7, **dadurch gekennzeichnet, dass** er weiter eine einziehbare Stütze (112) umfasst, die auf dem Gestell (101) montiert ist.

9. Anhänger (100) nach einem der Ansprüche 1 bis 8, **dadurch gekennzeichnet, dass** er eine Deichsel (1012) umfasst, die einen Kupplungsausleger (103) trägt, der über eine Schwenkverbindung, die das Absenken der Deichsel (1012) in Bezug auf das Gestell (101) ermöglicht, fest mit dem Gestell (101) verbunden ist.

10. Anhänger (100) nach einem der Ansprüche 1 bis 9, **dadurch gekennzeichnet, dass** er Aufhängungsmittel (204) umfasst, die sich im Inneren der Achse (107) befinden.

11. Anhänger (100) nach einem der Ansprüche 1 bis 10, **dadurch gekennzeichnet, dass** die Achse (107) ein äußeres Rohr (107A) umfasst, in dem ein inneres Rohr (107B) montiert ist, von dem jedes der Enden fest mit einem Rad (108) verbunden ist, wobei das Gestell (101) fest mit dem äußeren Rohr (107A) verbunden ist.

## Claims

1. Tiltable trailer (100) that can assume a high, or road, position, and a low loading position in which the trailer is tilted with respect to the ground, the trailer (100) comprising a chassis (101) resting on the ground on wheels (108), the chassis (101) being mounted on an axle (107) that pivots with respect to said wheels (108),
said trailer (100 further comprising:
- actuating means (110) of the pivoting of said axle (107) relative to the wheels (108) in such a way as to move said chassis (101) with respect to the ground, said actuating means (110) comprising at least one flexible element (1101) rigidly connected to said axle (107), said flexible element (1101) being a strap or a cable, and a tension-adjusting device (1102) of said flexible element (1101) attached to said chassis (101), and
- locking means (111) of the trailer (100) in the high position, separate from the actuating means (110),
said trailer (100) being **characterising in that** said locking means (111) comprise a sliding locking bar (1111), a first end (1111A) whereof is rigidly connected to said axle (107) and a second end (1111B) whereof is intended to cooperate with a locking mechanism (1112), mounted on said chassis (101), when the trailer (100) is in the high position.

2. Trailer (100) according to claim 1, **characterised in that** when said flexible element (1101) is a strap, said tension-adjusting device (1102) is a ratchet tensioner.

3. Trailer (100) according to claim 1, **characterised in that** when said flexible element (1101) is a cable, said tension-adjusting device (1102) is a winch for winding said cable.

4. Trailer (100) according to any of claims 1 to 3, **characterised in that** the second end (1111B) of the locking bar (1111) comprises a slot (1114) in which a locking pin (G) is intended to be housed when the trailer (100) is in the high position.

5. Trailer (100) according to any of claims 1 to 4, **characterised in that** said chassis (101) comprises a first frame, referred to as a rear frame (1010), connected, such that it pivots, to a second frame, referred to as a front frame (1011), so as to allow said trailer to be folded.

6. Trailer (100) according to claim 5, **characterised in that** the rear frame (1010) of the chassis (101) is connected to the front frame (1011) by means of connection means (102) situated on either side of said trailer (100), said connection means (102) supporting a swivel pin (1021) for pivoting the rear frame (1010) relative to the front frame (1011).

7. Trailer (100) according to claim 6, **characterised in that** said connection means (102) have a space (1025) situated between said rear frame (1010) and front frame (1011), intended to receive said axle (107) when the trailer (100) is in the low position.

8. Trailer (100) according to any of claims 1 to 7, **characterised in that** it further comprises a retractable stand (112) mounted on said chassis (101).

9. Trailer (100) according to any of claims 1 to 8, **characterised in that** it comprises a drawbar (1012) supporting a hitch tongue (103) rigidly connected to said chassis (101) by way of a pivot link allowing said drawbar (1012) to be folded back relative to said chassis (101).

10. Trailer (100) according to one of claims 1 to 9, **characterised in that** it comprises suspension means (204) situated inside said axle (107).

11. Trailer (100) according to one of claims 1 to 10, **characterised in that** said axle (107) comprises an outer tube (107A) in which an inner tube (107B) is mounted, each of the ends whereof is rigidly connected to a wheel (108), the chassis (101) being rigidly connected to the outer tube (107A).
